(19) Europäisches Patentamt / European Patent Office / Office européen des brevets

(11) **EP 2 048 460 A1**

(12) **EUROPEAN PATENT APPLICATION**

(43) Date of publication:
**15.04.2009 Bulletin 2009/16**

(51) Int Cl.:
***F25D 21/06*** *(2006.01)*

(21) Application number: **07019872.6**

(22) Date of filing: **11.10.2007**

| | |
|---|---|
| (84) Designated Contracting States:<br>**AT BE BG CH CY CZ DE DK EE ES FI FR GB GR**<br>**HU IE IS IT LI LT LU LV MC MT NL PL PT RO SE**<br>**SI SK TR**<br>Designated Extension States:<br>**AL BA HR MK RS**<br><br>(71) Applicant: **Nico Technology Ltd.**<br>**Banciao City**<br>**Taipei Hsien (TW)** | (72) Inventor: **Choo, Kwang-Hua**<br>**Banciao City**<br>**Taipei Hsien (TW)**<br><br>(74) Representative: **Hauck Patent- und Rechtsanwälte**<br>**Neuer Wall 50**<br>**20354 Hamburg (DE)** |

(54) **Refrigeration control device to reduce power consumption of a refrigeration appliance**

(57)     A refrigeration control device to reduce power consumption of a refrigeration appliance has an ambient temperature/humidity sensor (42) and a main controller (43). The ambient temperature/humidity sensor (42) is mounted outside the refrigeration appliance. The main controller (43) is electronically connected to the ambient temperature/humidity sensor (42) and at least one defogging heater (17, 27, 37) in the refrigeration appliance and stores a defogging database and a defogging control process. The defogging database is a table of multiple standard dew point values and multiple defogging duration values. The defogging control process calculates a dew point, enters the table with the closest standard dew point value and extracts the corresponding defogging duration value from the table in the defogging database and activates the defogging heater for a number of times equal to the extracted defogging duration value.

FIG.2

**Description**

1. Field of the Invention

The present invention relates to a control device, and more particularly to a refrigeration control device to reduce power consumption of a refrigeration appliance.

2. Description of Related Art

Refrigerators and freezers are common appliances in supermarkets, convenience stores and the like. A refrigeration appliance may comprise one or more cabinets, a compressor, a condenser, at least one expansion valve, at least one evaporator and a control unit. Each cabinet comprises a chill box and an external compartment. The chill box in most stores has a glass door and a defroster. The defroster blows air on the glass door to keep condensation and fog from forming on the glass door. The compressor is mounted in an external compartment of one cabinet and compresses low-pressure vapor refrigerant to high-pressure vapor refrigerant. The condenser is mounted in the external compartment of the cabinet with the compressor, is connected to the compressor and condenses the high-pressure vapor refrigerant to high-pressure liquid refrigerant by removing heat from the high-pressure refrigerant. An expansion valve is mounted in each chill box, is connected to the condenser to control and atomize the high-pressure liquid refrigerant from the condenser to a low-pressure liquid refrigerant and has a temperature sensor. The temperature sensor is mounted in the corresponding chill box, senses air temperature in the chill box and sends a temperature signal to the expansion valve to regulate the flow of liquid refrigerant through the expansion valve. The control unit is electronically connected to and activates the compressor and the expansion valve when chill box temperature is higher than a preset temperature in the control unit. Accordingly, the cabinet will be flooded with cooled air so the temperature inside the cabinet decreases.
Furthermore, the cabinet usually has a glass front to allow consumers to select food inside the cabinet. However, moisture will cause the glass to fog up so consumers cannot look inside the cabinet if the temperature difference between inside and outside the cabinet is large. To solve this problem, a defogging heater is used to heat the glass to prevent the glass from fogging.
However, the defogging heater raises of the glass and the temperature inside the cabinet. Higher temperature inside the cabinet causes the control unit to activate the compressor, the expansion valve and the refrigeration fan to reduce the temperature inside the cabinet. In conclusion, the defogging heater causes the refrigeration appliance to consume more power.
To overcome the shortcomings, the present invention provides a stapler to mitigate or obviate the aforementioned problems.
The main objective of the invention is to provide a refrigeration control device to reduce power consumption of a refrigeration appliance.
The refrigeration control device to reduce power consumption of a refrigeration appliance having at least one cabinet with each cabinet having a chill box and an external compartment, at least one expansion valve being mounted respectively in the chill box of the at least one cabinet, at least one evaporator being mounted respectively in the chill box of the at least one cabinet and being connected to the corresponding expansion valve, at least one optional defrosting heater being mounted respectively in the chill box of the at least one cabinet adjacent to the corresponding evaporator, a compressor being mounted in an external compartment of one of the at least one cabinet and being connected to the at least one evaporator, a condenser being mounted in an external compartment of one of the at least one cabinet and being connected to the compressor, at least one cooling fan being mounted respectively in the chill box of the at least one cabinet adjacent to the corresponding evaporator and blowing air in the corresponding chill box across the corresponding evaporator and at least one defogging heater mounted respectively in the chill box of the at least one cabinet, and the controlling device comprising:

an ambient temperature/humidity sensor being mounted outside the chill box of the cabinet and sensing ambient temperature and humidity outside the chill box; and
a main controller being mounted in an external compartment of one of the at least one cabinet, being connected to the ambient temperature/humidity sensor and the at least one defogging heater and storing

a dew point formula to calculate a dew point from ambient temperature and humidity outside the chill box;
a defogging database holding multiple standard dew point values and multiple defogging duration values corresponding respectively to the standard dew point values; and
a defogging control process being executed by the main controller to calculate a dew point, find a matching standard dew point value and extracting the corresponding defogging duration value in the defogging database and turning on the defogging heater for a number of times equal to the extracted defogging duration value.

Other objectives, advantages and novel features of the invention will become more apparent from the following detailed description when taken in conjunction with the accompanying drawings.

IN THE DRAWINGS

Fig. 1 is a perspective view of a cabinet-type refrigeration appliance with a glass door;
Fig. 2 is a functional block diagram of a first embodiment of a refrigeration control device in accordance with the present invention and a compressor, a condenser, an expansion valve and a cooling fan of the refrigeration appliance in Fig. 1;
Fig. 3 is a defogging table stored in a main controller of the refrigeration control device in Fig. 2;
Fig. 4 is a flow chart of a defogging control process stored in the main controller in Fig. 2;
Fig. 5 is a perspective view of an open cabinet-type refrigeration appliance with glass windows;
Figs. 6A~6H are circuit diagrams of the refrigeration control device in accordance with the present invention;
Fig. 7 is a perspective view of a cabinet-type freezer with a glass door;
Fig. 8 is a functional block diagram of a second embodiment of a refrigeration control device in accordance with the present invention;
Fig. 9 is a flow chart of a defrosting control process stored in the main controller in Fig. 8;
Fig. 10 is a front view of a multi-unit open cabinet-type refrigeration appliance;
Fig. 11 is a functional block diagram of a third embodiment of a refrigeration control device in accordance with the present invention; and
Fig. 12 is a flow chart of a compressor control process stored in the main controller in Fig. 11.

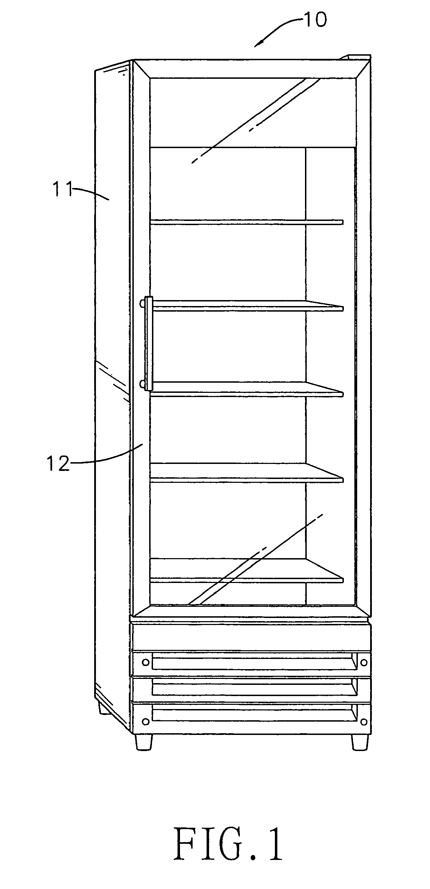

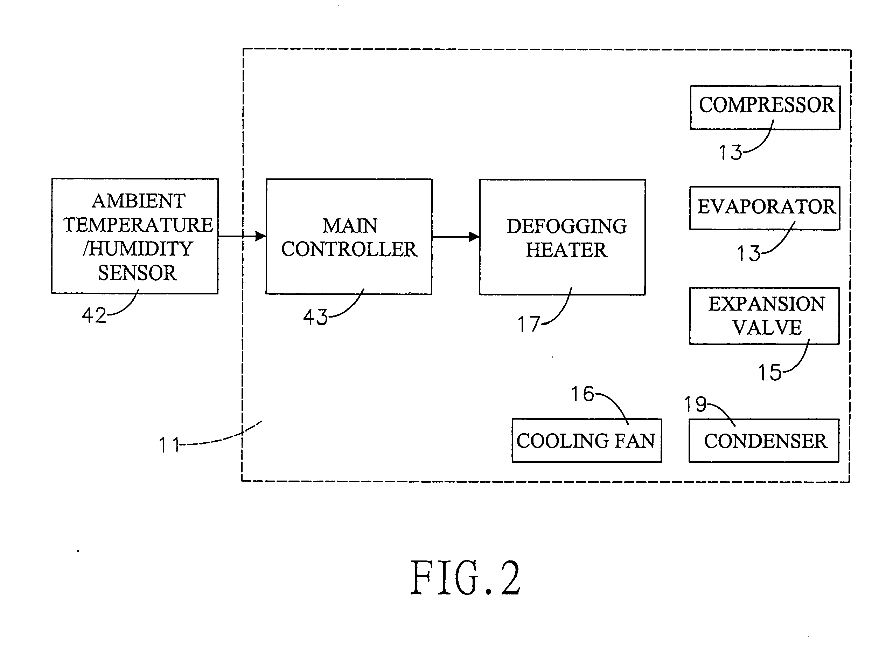

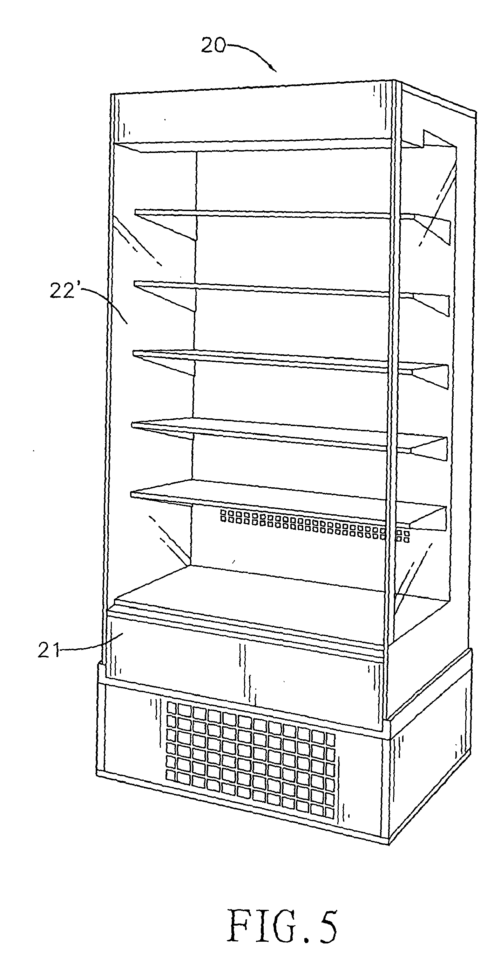

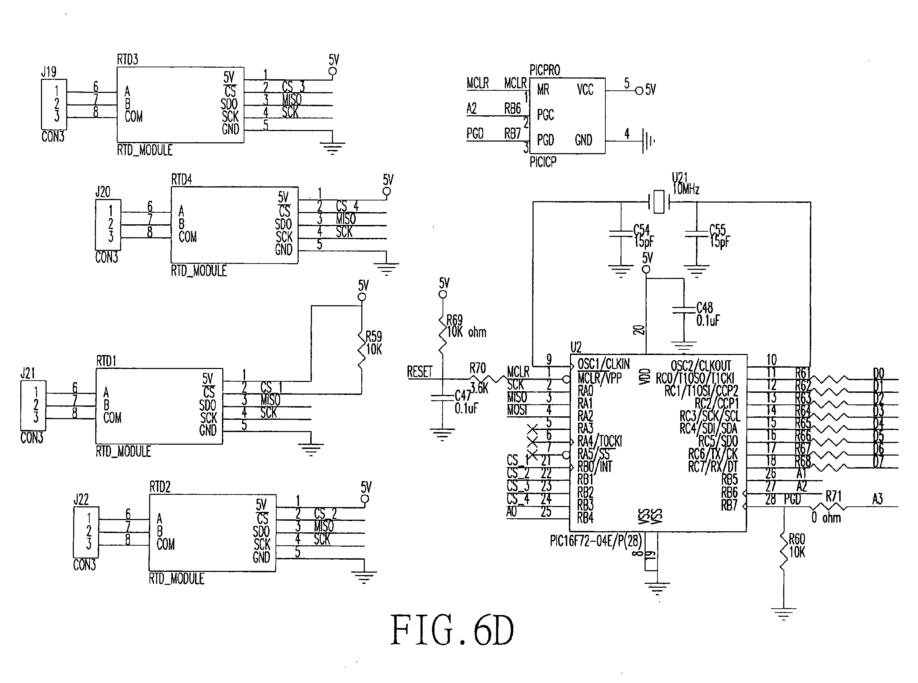

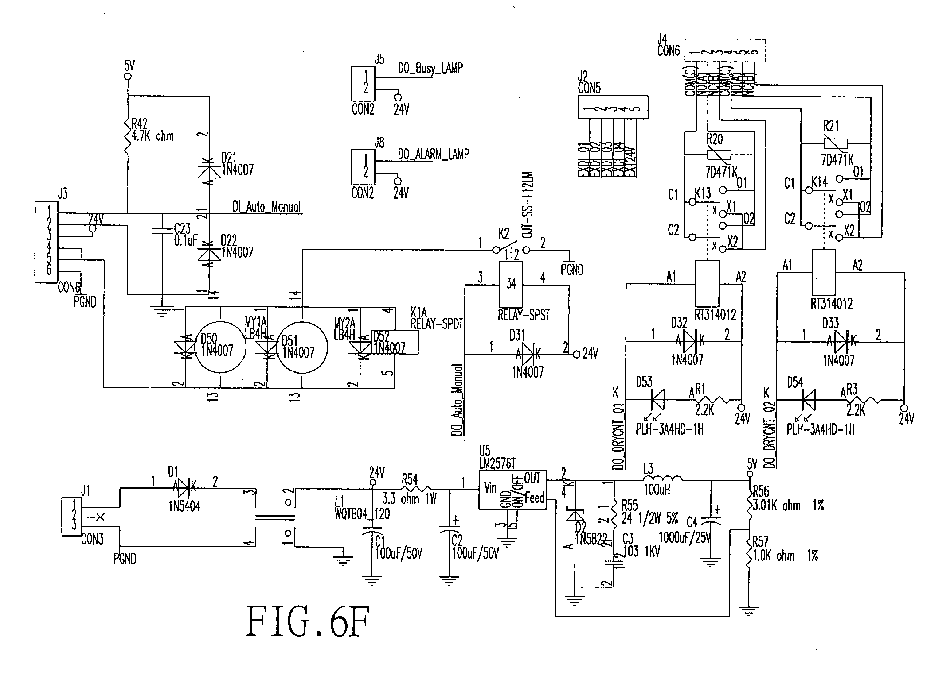

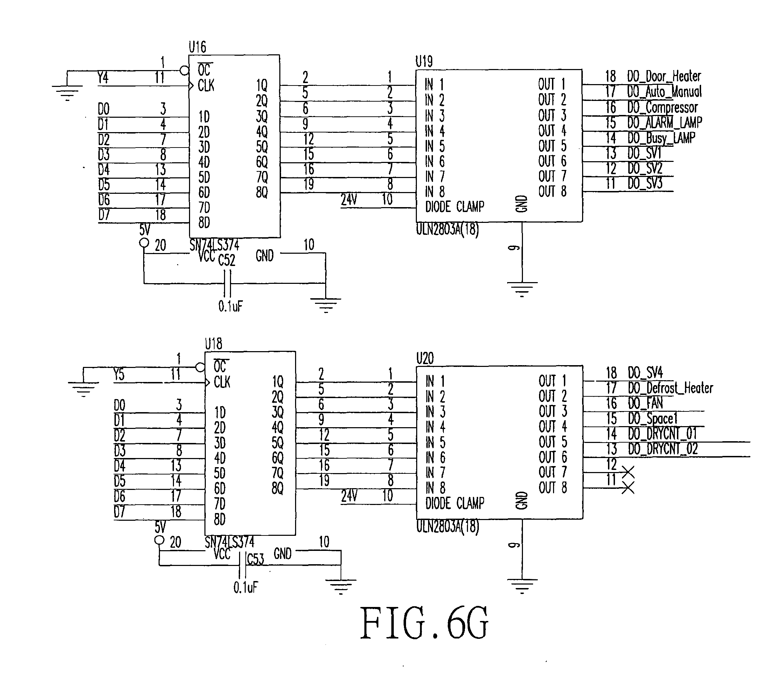

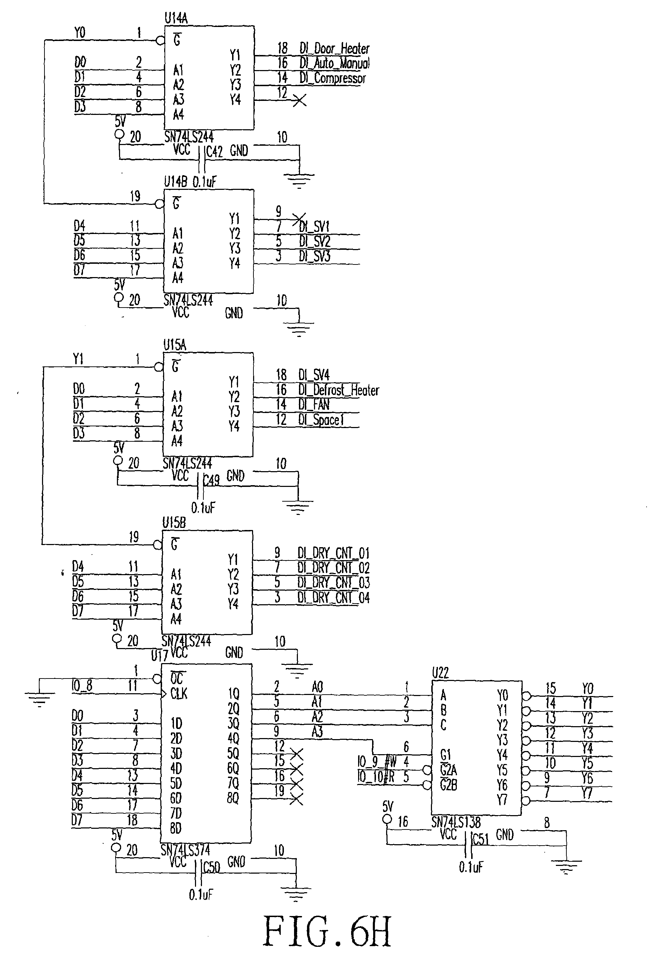

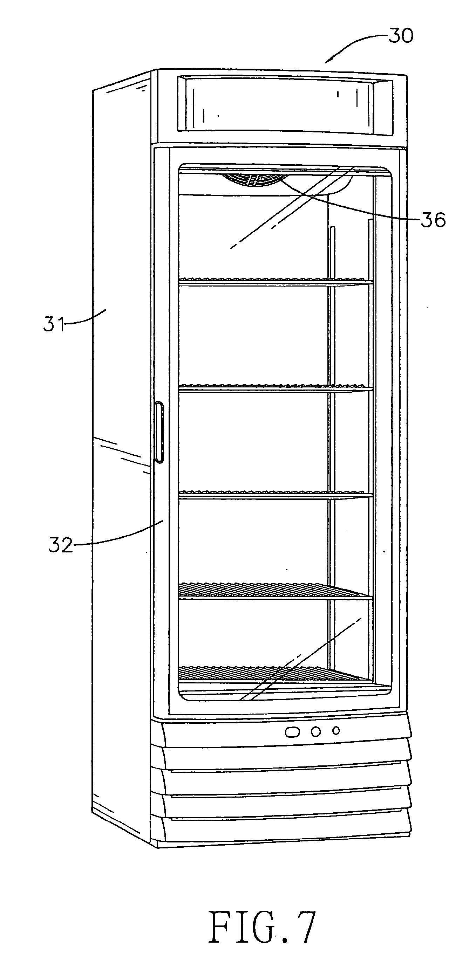

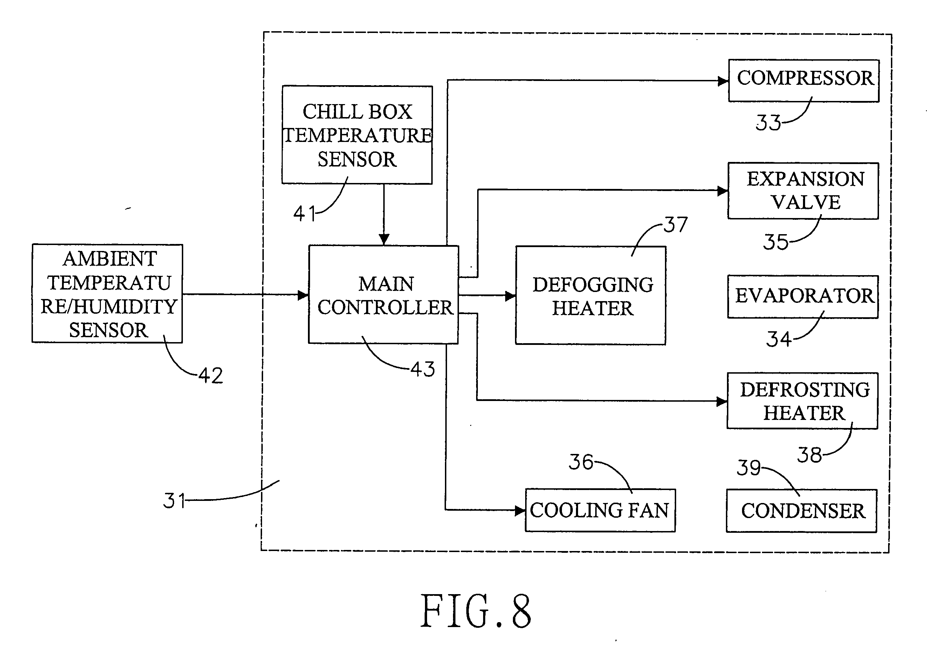

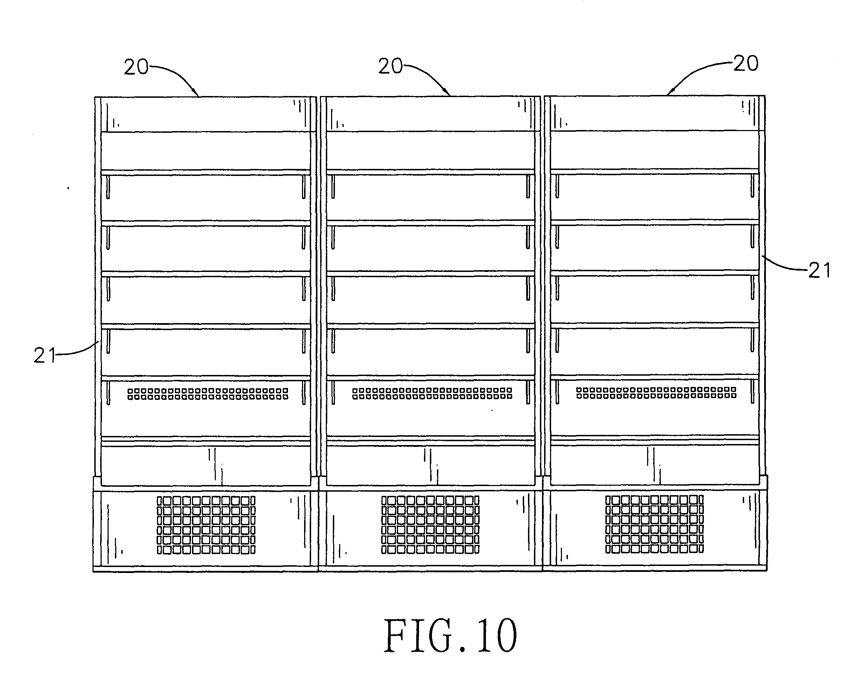

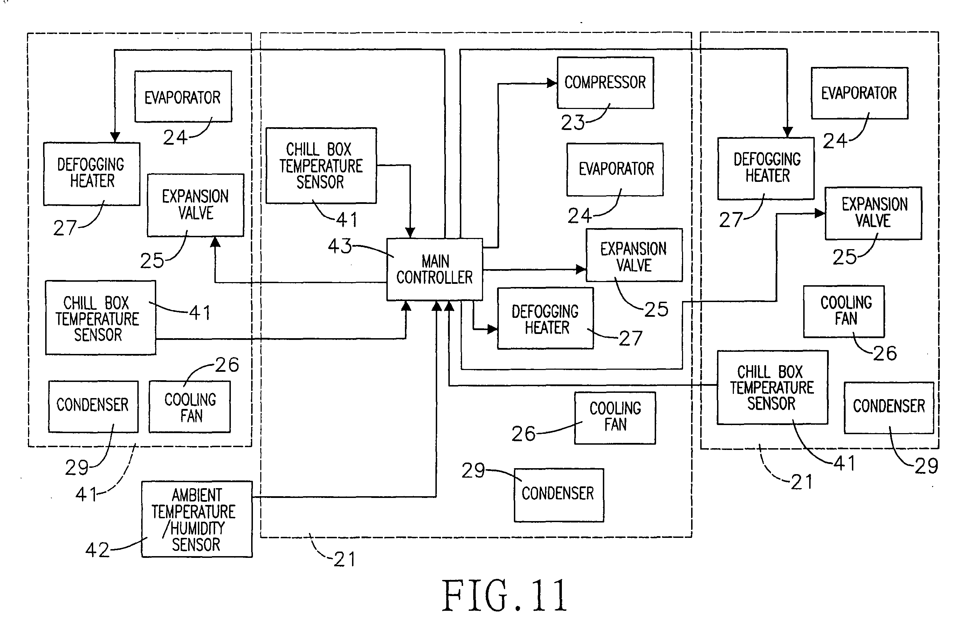

With reference to Figs. 2, 8 and 11, a refrigeration control device in accordance with the present invention is used to reduce power consumption of a refrigeration appliance. With further reference to Figs. 1, 5, 7 and 10, the refrigeration appliance may be a closed cabinet-type refrigeration appliance (10), an open cabinet-type refrigeration appliance (20) or a cabinet-type freezer (30) and comprises at least one cabinet (11, 21, 31), at least one expansion valve (15, 25, 35), at least one evaporator (14, 24, 34), at least one optional defrosting heater (38), a compressor (13, 23, 33), a condenser (19, 29, 39), at least one cooling fan (16, 26, 36) and at least one defogging heater (17, 27, 37).
Each cabinet (11, 21, 3 1) has a chill box and an external compartment. The chill box has a front, two sides, an optional glass door (12, 32) and optional glass windows (22). When the refrigeration appliance is a closed cabinet-type refrigeration appliance (10) or a cabinet-type freezer (30), each cabinet (11,31) has a glass door (12, 32) mounted on the front of the chill box. When the refrigeration appliance is an open cabinet-type refrigeration appliance (20), each cabinet (21) has two glass windows (22) mounted respectively on the sides of the chill box.
The at least one expansion valve (15, 25, 35) is mounted respectively in or adjacent to the chill box of the at least one cabinet (11,21,31).
The at least one evaporator (14, 24, 34) is mounted respectively in the chill box of the at least one cabinet (11,21,31) and is connected to the corresponding expansion valve (15, 25, 35) to absorb heat and cool the chill box.
The at least one defrosting heater (38) is mounted respectively in the chill box of the at least one cabinet (31) of the cabinet-type freezer (30) adjacent to the corresponding evaporator (34) and defrosts the evaporator (34) because the evaporator (34) is often frosted over in the cabinet-type freezer (30).
The compressor (13, 23, 33) is mounted in an external compartment of one of the at least one cabinet (11,21,31) and is connected to the at least one evaporator (14, 24, 34).
The condenser (19, 29, 39) is mounted in an external compartment of one of the at least one cabinet (11, 21, 31) and is connected to the compressor (13, 23, 33).
The at least one cooling fan (16, 26, 36) is mounted respectively in the chill box of the at least one cabinet (11,21,31) adjacent to the corresponding evaporator (14, 24, 34) and blows air in the corresponding chill box across the corresponding evaporator (14, 24, 34) to cool the air in the corresponding chill box.
The at least one defogging heater (17, 27, 37) is mounted respectively near and heats the glass door (12, 32) and glass windows (22) on the chill box of the at least one cabinet (11, 21, 31) to keep fog from forming on the glass door (12, 32) and glass windows (22).
The refrigeration control device of the present invention comprises an ambient temperature/humidity sensor (42), at least one optional chill box temperature sensor (41) and a main controller (43).
The ambient temperature/humidity sensor (42) is mounted outside the chill box of the cabinet (11, 21, 31) and senses ambient temperature and humidity outside the chill box of the cabinet (11,21,31).
With further reference to Figs. 6D, 6F, 6G and 6H, the at least one chill box temperature sensor (41) is mounted respectively in the chill box of the at least one cabinet (11, 21, 31), senses chill box temperature inside the chill box of the corresponding cabinet (11, 21, 31) and may be a resistance temperature detector (RTD). A refrigeration appliance comprising three cabinets (21) will have three chill box temperature sensors (41) mounted respectively in the chill boxes of the three cabinets (21).

The main controller (43) is mounted in an external compartment of one of the at least one cabinet (11, 21, 31), is connected to the ambient temperature/humidity sensor (42), the at least one chill box temperature sensor (41) and the at least one defogging heater (17, 27, 37), may further be connected to the compressor (23, 33), the at least one expansion valve (25, 35), the at least one cooling fan (36) and the at least one defrosting heater (38), stores a dew point formula, a defogging database and a defogging control process and may further store an optional default dew point calculating time interval, an optional expected defrosting time, an optional defrosting setting time, an optional expected delay time, at least one optional maximum temperature corresponding respectively to the at least one cabinet, an optional defrosting controlling process, at least one optional minimum temperature corresponding respectively to the at least one cabinet and an optional compressor controlling process.

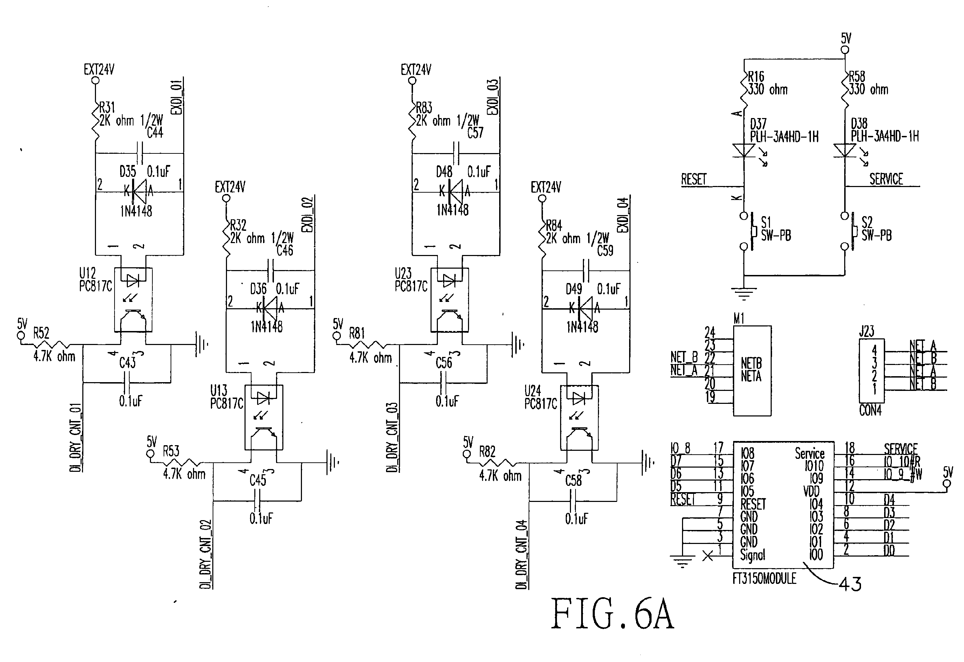

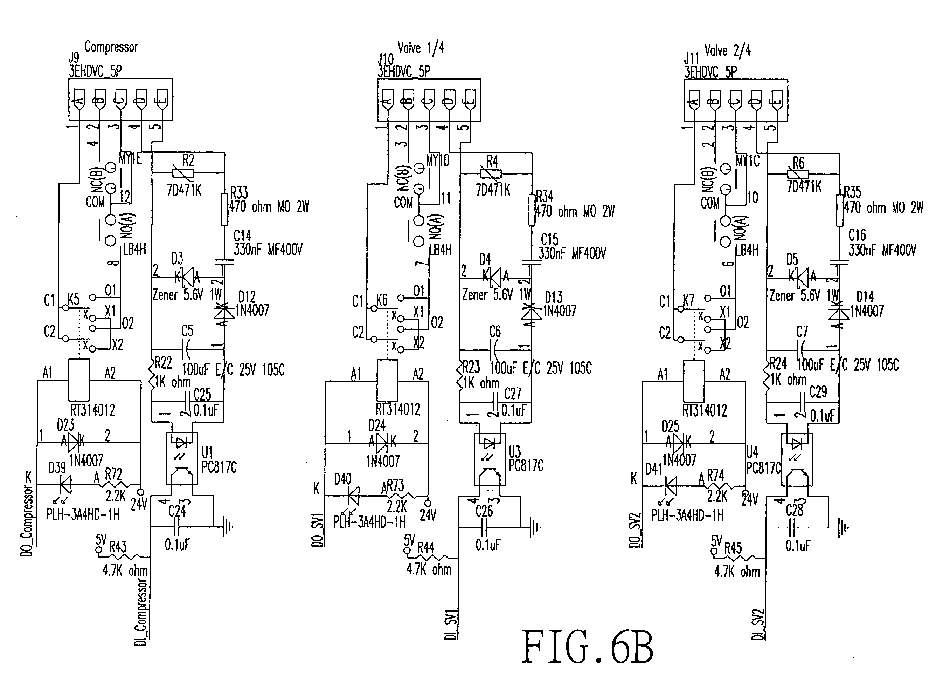

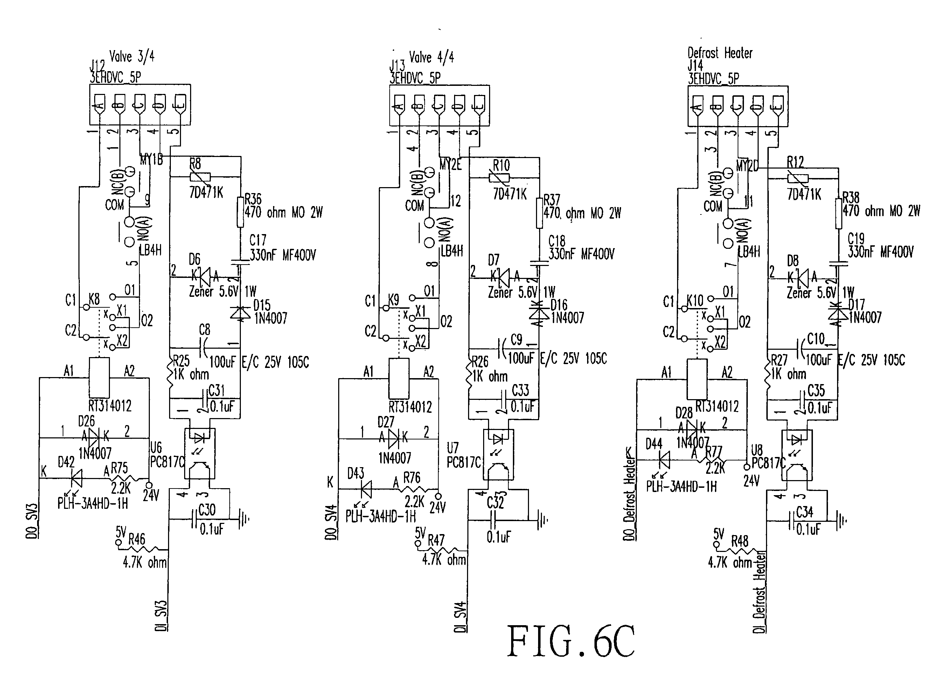

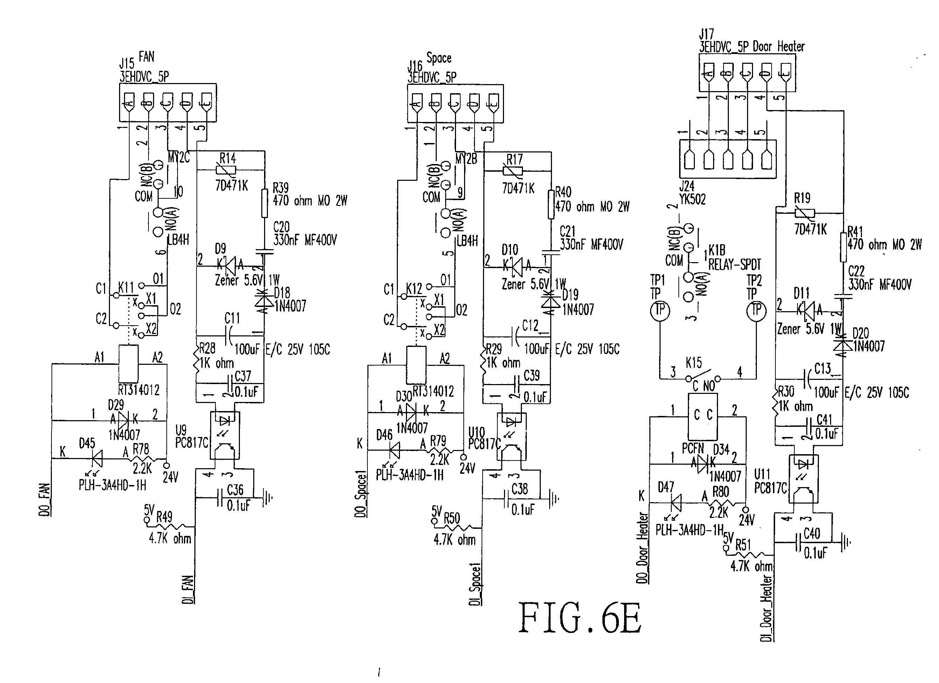

With further reference to Fig. 6A, 6B, 6C and 6E, the main controller (43) may be a FT3150 processor integrated circuit (IC) having multiple connectors (J9, J10, J15, J17 and J 14). The connectors (J9, J10, J15, J17 and J14) connect the main controller (43) respectively to the compressor (23, 33), the at least one expansion valve (25, 35), the at least one cooling fan (36), the at least one defogging heater (17, 27, 37) and the at least one defrosting heater (38).

The dew point formula calculates a dew point from ambient temperature and humidity outside the chill box of the cabinet (11, 21, 31) and is

$$DP = ((0.6677 - \log EW) * 237.3)/(\log EW - 8.16077),$$

wherein

$$\log EW = 0.66077 + (7.5 * temperature/(237.3 + temperature)) + \log_{10}(humility) - 2$$

For example, if the temperature and humidity outside the cabinet (11,21,31) are respectively 50 degrees centigrade and 90%, the calculated dew point is 47.89 degrees centigrade.

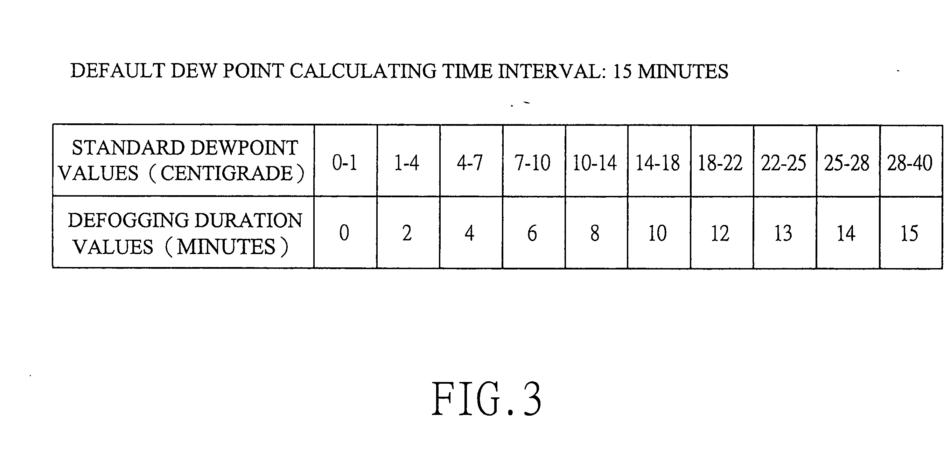

With further reference to Fig. 3, the defogging database holds multiple standard dew point values and multiple defogging duration values. The defogging duration values correspond respectively to the standard dew point values. For example, if the default dew point calculating time interval and the calculated dew point are respectively 15 minutes and 6 degrees centigrade, the defogging duration value is 4 minutes.

The defogging control process is executed by the main controller (43) to calculate a dew point, find a matching standard dew point value and extract the corresponding defogging duration value from the defogging database and turn on the defogging heater (17, 27, 37) for a number of times equal to the extracted defogging duration value.

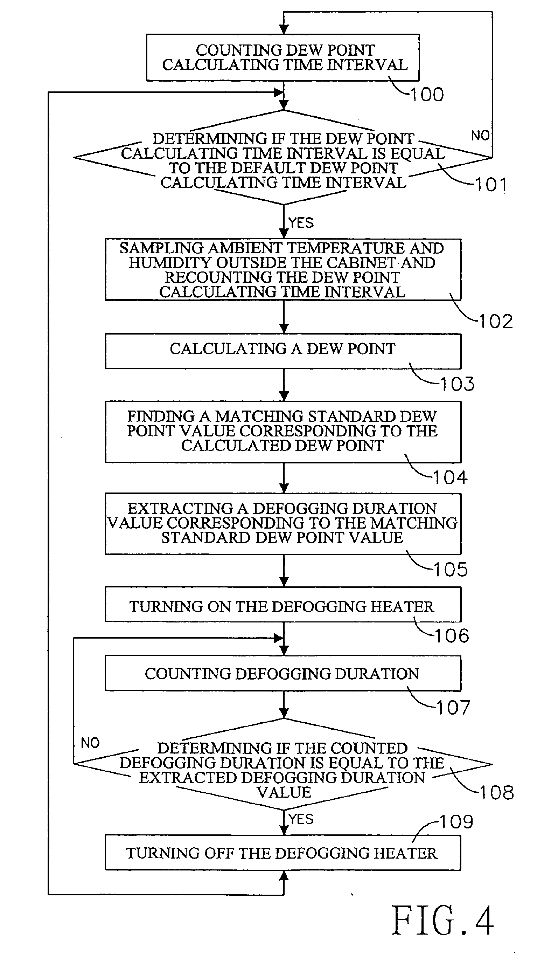

With further reference to Fig. 4, the defogging control process may comprise steps of counting dew point calculating time interval (100), determining if the dew point calculating time interval is equal to the default dew point calculating time interval (101), sampling ambient temperature and humidity outside the cabinet and recounting the dew point calculating time interval when the dew point calculating time interval is equal to the default dew point calculating time interval (102), calculating a dew point (103), finding a matching standard dew point value corresponding to the calculated dew point (104), extracting a defogging duration value corresponding to the matching standard dew point value (105), turning on the defogging heater (106), counting defogging duration (107), determining if the counted defogging duration is equal to the extracted defogging duration value (108) and turning off the defogging heater when the counted defogging duration is equal to the extracted defogging duration value (109).

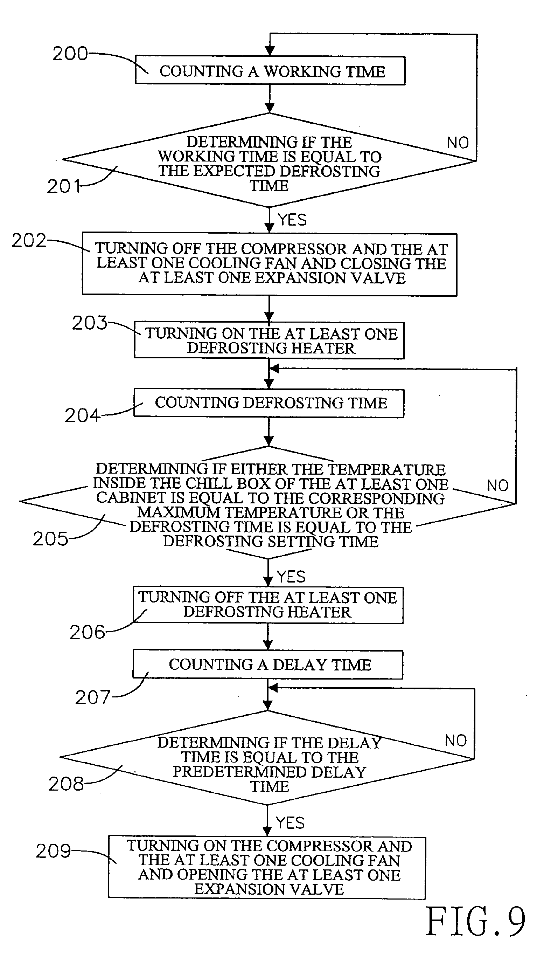

With further reference to Fig. 9, the defrosting control process is specially applied to the cabinet-type freezer (30) and is executed by the main controller (43) to

a) turn off the compressor (33) and the at least one cooling fan (36), close the at least one expansion valve (35) and turn on the at least one defrosting heater (38) when the cabinet-type freezer (30) has operated for an interval equal to an expected defrosting interval;

b) turn off the at least one defrosting heater (38) when either the at least one defrosting heater (38) has been turned on for a defrosting time equal to the defrosting setting time or the temperature inside the chill box of the at least one cabinet (11, 21, 31) is equal to a specific maximum temperature; and

c) turn on the compressor (33) and the at least one cooling fan (36) and open the at least one expansion valve (35) after the at least one defrosting heater (38) is turned off in a while.

The defrosting control process may comprise steps of counting a working time when the cabinet-type freezer is turned on (200), determining if the working time is equal to the expected defrosting time (201), turning off the compressor and the at least one cooling fan and closing the at least one expansion valve when the working time is equal to the expected defrosting time (202), turning on the at least one defrosting heater (203), counting defrosting time (204), determining if either the temperature inside the chill box of the at least one cabinet is equal to the corresponding maximum temperature or the defrosting time is equal to the defrosting setting time (205), turning off the at least one defrosting heater when either the temperature inside the chill box of the at least one cabinet is equal to the corresponding maximum temperature or the defrosting time is equal to the defrosting setting time (206), counting a delay time (207), determining if the delay time is equal to the predetermined delay time (208) and turning on the compressor and the at least one cooling fan and opening the at least one expansion valve when the delay time is equal to the expected delay time (209).

The compressor control process is specially applied to the refrigeration appliance having multiple cabinets (21) so the refrigeration control device has multiple chill box temperature sensors (41) corresponding respectively to the cabinets (21).

Furthermore, the compressor control process is executed by the main controller (43) to

a) turn on the compressor (23) and open all expansion valves (25) when the temperature inside any cabinet (21) is higher than the corresponding maximum temperature;

b) closing the corresponding expansion valve (25) when the temperature inside any cabinet (21) is lower than the corresponding minimum temperature; and

c) turning off the compressor (23) when all expansion valves (25) are closed.

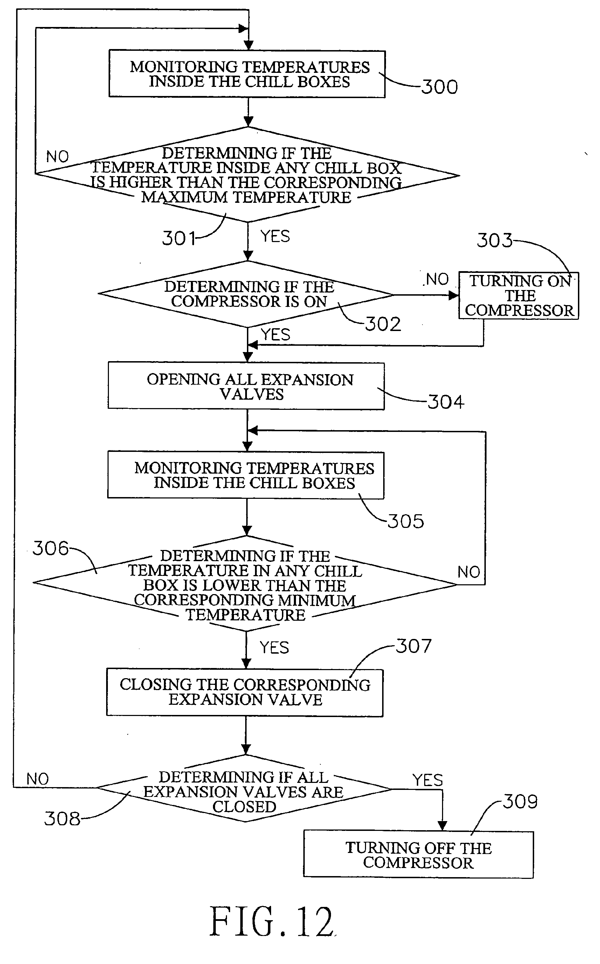

With further reference to Fig. 12, the compressor control process may comprise steps of monitoring temperatures inside the chill boxes (300), determining if the temperature inside any chill box is higher than the corresponding maximum temperature (301), determining if the compressor is on when the temperature inside any chill box is higher than the corresponding maximum temperature (302), turning on the compressor when the compressor is off (303), opening all expansion valves when the compressor is on (304), monitoring temperatures inside the chill boxes (305), determining if the temperature in any chill box is lower than the corresponding minimum temperature (306), closing the corresponding expansion valve when the temperature in any chill box is lower than the corresponding minimum temperature (307), determining if all expansion valves are closed (308) and turning off the compressor when all expansion valves are closed (309).

With such a refrigeration control device, the defogging heater (17, 27, 37) will not operate all the time. Accordingly, the defogging heater (17, 27, 37) generates less heat so the compressor is not required to work further to compensate for increased temperature inside the chill box of the cabinet (11, 21, 31). Consequently, less work of the compressor (13, 23, 33) results in less power being consumed by the refrigeration appliance. In addition, when the controlling device is used with a refrigeration appliance having a compressor (23) and multiple cabinets (21), the compressor (23) will be turned on when the temperature in any cabinet (21) is excessively high. Accordingly, the compressor (23) will not be frequently turned on and off so power consumption of the refrigeration appliance will be reduced.

**Claims**

1. A refrigeration control device to reduce power consumption of a refrigeration appliance having at least one cabinet (11, 21, 31) with each cabinet (11, 21, 31) having a chill box and an external compartment, at least one expansion valve (15, 25, 35) being mounted respectively in the chill box of the at least one cabinet (11, 21, 31), at least one evaporator (14, 24, 34) being mounted respectively in the chill box of the at least one cabinet (11,21,31) and being connected to the corresponding expansion valve (15, 25, 35), at least one optional defrosting heater (38) being mounted respectively in the chill box of the at least one cabinet (11, 21, 31) adjacent to the corresponding evaporator (14, 24, 34), a compressor (13, 23, 33) being mounted in an external compartment of one of the at least one cabinet (11, 21, 31) and being connected to the at least one evaporator (14, 24, 34), a condenser (19, 29, 39) being mounted in an external compartment of one of the at least one cabinet (11, 21, 31) and being connected to the compressor (13, 23, 33), at least one cooling fan (16, 26, 36) being mounted respectively in the chill box of the at least one cabinet (11, 21, 31) adjacent to the corresponding evaporator (14, 24, 34) and blowing air in the corresponding chill box across the corresponding evaporator (14, 24, 34) and at least one defogging heater (17, 27, 37) mounted respectively in the chill box of the at least one cabinet (11, 21, 31), and the controlling device comprising:

an ambient temperature/humidity sensor (42) being mounted outside the chill box of the cabinet (11, 21, 31) and sensing ambient temperature and humidity outside the chill box; and
a main controller (43) being mounted in an external compartment of one of the at least one cabinet (11, 21, 31), being connected to the ambient temperature/humidity sensor (42) and the at least one defogging heater (17, 27, 37) and storing

a dew point formula to calculate a dew point from ambient temperature and humidity outside the chill box;
a defogging database holding multiple standard dew point values and multiple defogging duration values corresponding respectively to the standard dew point values; and
a defogging control process being executed by the main controller (43) to calculate a dew point, find a matching standard dew point value and extracting the corresponding defogging duration value in the defogging database and turning on the defogging heater (17, 27, 37) for a number of times equal to the extracted defogging duration value.

2. The refrigeration control device as claimed in claim 1, wherein

the main controller (43) further stores a default dew point calculating time interval; and
the defogging controlling process comprises steps of

counting dew point calculating time interval;
determining if the dew point calculating time interval is equal to the default dew point calculating time interval;
sampling ambient temperature and humidity outside the cabinet (11, 21, 31) and recounting the dew point calculating time interval when the dew point calculating time interval is equal to the default dew point calculating time interval;
calculating a dew point;
finding a matching standard dew point value corresponding to the calculated dew point;
extracting a defogging duration value corresponding to the matching standard dew point value;
turning on the defogging heaters (17, 27, 37);
counting defogging duration;
determining if the counted defogging duration is equal to the extracted defogging duration value; and
turning off the defogging heaters (17, 27, 37) when the counted defogging duration is equal to the extracted defogging duration value.

3. The refrigeration control device as claimed in claim 1, wherein

the main controller (43) further connects to the compressor (33), the at least one expansion valve (35), the at least one cooling fan (36) and the at least one defrosting heater (38) and further stores

an expected defrosting time;
a defrosting setting time;
a predetermined delay time; and
a defrosting controlling process executed by the main controller (43) to

turn off the compressor (33) and the at least one cooling fan (36), close the at least one expansion valve (35) and turn on the at least one defrosting heater (38) when the refrigeration appliance has operated for an interval equal to the expected defrosting interval;
turn off the at least one defrosting heater (3 8) when the at least one defrosting heater (38) has been turned on for a defrosting time equal to the defrosting setting time; and
turn on the compressor (33) and the at least one cooling fan (36) and open the at least one expansion valve (35) after the at least one defrosting heater (3 8) is turned off in a while.

4. The refrigeration control device as claimed in claim 3, wherein the defrosting control process comprises steps of

counting a working time when the refrigeration appliance is turned on;
determining if the working time is equal to the expected defrosting time;
turning off the compressor (33) and the at least one cooling fan (36) and closing the at least one expansion valve (35) when the working time is equal to the expected defrosting time;
turning on the at least one defrosting heater (38);
counting defrosting time;
determining if the defrosting time is equal to the defrosting setting time;

turning off the at least one defrosting heater (38) when the defrosting time is equal to the defrosting setting time;
counting a delay time;
determining if the delay time is equal to the predetermined delay time; and
turning on the compressor (33) and the at least one cooling fan (36) and opening the at least one expansion valve (35) when the delay time is equal to the predetermined delay time.

5. The refrigeration control device as claimed in claim 3 further comprising at least one chill box temperature sensor (41) being mounted respectively in the chill box of the at least one cabinet (31) and sensing chill box temperature inside the chill box of the corresponding cabinet (31), wherein

the main controller (43) is further connected to the at least one chill box temperature sensor (41) and stores at least one maximum temperature for the chill box of the at least one cabinet (31); and
the defrosting controlling process also turns off the at least one defrosting heater (38) when the temperature inside the chill box of the at least one cabinet (31) is equal to the corresponding maximum temperature.

6. The refrigeration control device as claimed in claim 5, wherein the defrosting control process comprises steps of

counting a working time when the refrigeration appliance is turned on;
determining if the working time is equal to the expected defrosting time;
turning off the compressor (33) and the at least one cooling fan (36) and closing the at least one expansion valve (35) when the working time is equal to the expected defrosting time;
turning on the at least one defrosting heater (38);
counting defrosting time;
determining if either the temperature inside each chill box of the at least one cabinet (31) is equal to the corresponding maximum temperature or the defrosting time is equal to the defrosting setting time;
turning off the at least one defrosting heater (38) when either the temperature inside the chill box of the at least one cabinet (31) is equal to the corresponding maximum temperature or the defrosting time is equal to the defrosting setting time;
counting a delay time;
determining if the delay time is equal to the predetermined delay time; and
turning on the compressor (33) and the at least one cooling fan (36) and opening the at least one expansion valve (35) when the delay time is equal to the predetermined delay time.

7. The controlling device as claimed in claim 1 further comprising multiple chill box temperature sensors (41), wherein

the refrigeration appliance has multiple cabinets (11, 21, 31), multiple expansion valves (15, 25, 35), multiple evaporators (14, 24, 34), multiple optional defrosting heaters (38), a compressor (13, 23, 33), a condenser (19, 29, 39), multiple cooling fans (16, 26, 36) and multiple defogging heaters (17, 27, 37);
the chill box temperature sensors (41) being mounted respectively in the chill boxes of the cabinets (11, 21, 31) and sensing chill box temperatures inside the chill boxes of the cabinets (11, 21, 31); and
the main controller (43) further connects to the expansion valves (15, 25, 35), the compressor (13, 23, 33) and the cooling fans (26, 36) and further stores multiple maximum temperatures corresponding respectively to the cabinets (13, 23, 33), multiple minimum temperatures corresponding respectively to the cabinets (13, 23, 33) and a compressor controlling process executed by the main controller (43) to
turn on the compressor (13, 23, 33) and open all expansion valves (15, 25, 35) when the temperature inside any chill box is higher than the corresponding maximum temperature;
close the corresponding expansion valve (15, 25, 35) when the temperature inside any chill box is lower than the corresponding minimum temperature; and
turn off the compressor (13, 23, 33) when all expansion valves (15, 25, 35) are closed.

8. The controlling device as claimed in claim 7, wherein the compressor control process comprises steps of

monitoring temperatures inside the chill boxes;
determining if the temperature inside any chill box is higher than the corresponding maximum temperature;
determining if the compressor (13, 23, 33) is on when the temperature inside any chill box is higher the corresponding maximum temperature;
turning on the compressor (13,23, 33) when the compressor (13, 23, 33) is off;
opening all expansion valves (15, 25, 35) when the compressor (13, 23, 33) is on;

monitoring temperatures inside the chill boxes;

determining if the temperature in any chill box is lower than the corresponding minimum temperature;

closing the corresponding expansion valve (15, 25, 35) when the temperature in any chill box is lower than the corresponding minimum temperature;

determining if all expansion valves (15, 25, 35) are closed; and

turning off the compressor (13, 23, 33) when all expansion valves (15, 25, 35) are closed.

FIG.1

COMPRESSOR 13

EVAPORATOR 13

EXPANSION VALVE 15

CONDENSER 19

DEFOGGING HEATER 17

COOLING FAN 16

MAIN CONTROLLER 43

AMBIENT TEMPERATURE /HUMIDITY SENSOR 42

11

FIG.2

DEFAULT DEW POINT CALCULATING TIME INTERVAL: 15 MINUTES

| STANDARD DEWPOINT VALUES (CENTIGRADE) | 0-1 | 1-4 | 4-7 | 7-10 | 10-14 | 14-18 | 18-22 | 22-25 | 25-28 | 28-40 |
|---|---|---|---|---|---|---|---|---|---|---|
| DEFOGGING DURATION VALUES (MINUTES) | 0 | 2 | 4 | 6 | 8 | 10 | 12 | 13 | 14 | 15 |

# FIG.3

EP 2 048 460 A1

FIG.4

FIG.5

FIG.6A

FIG.6B

FIG.6C

FIG.6D

FIG.6E

FIG.6F

EP 2 048 460 A1

FIG.6G

FIG.6H

FIG.7

COMPRESSOR 33

EXPANSION VALVE 35

EVAPORATOR 34

DEFROSTING HEATER 38

CONDENSER 39

DEFOGGING HEATER 37

COOLING FAN 36

CHILL BOX TEMPERATURE SENSOR 41

MAIN CONTROLLER 43

AMBIENT TEMPERATURE/HUMIDITY SENSOR 42

31

FIG.8

200 — COUNTING A WORKING TIME

201 — DETERMINING IF THE WORKING TIME IS EQUAL TO THE EXPECTED DEFROSTING TIME — NO

YES

202 — TURNING OFF THE COMPRESSOR AND THE AT LEAST ONE COOLING FAN AND CLOSING THE AT LEAST ONE EXPANSION VALVE

203 — TURNING ON THE AT LEAST ONE DEFROSTING HEATER

204 — COUNTING DEFROSTING TIME

205 — DETERMINING IF EITHER THE TEMPERATURE INSIDE THE CHILL BOX OF THE AT LEAST ONE CABINET IS EQUAL TO THE CORRESPONDING MAXIMUM TEMPERATURE OR THE DEFROSTING TIME IS EQUAL TO THE DEFROSTING SETTING TIME — NO

YES

206 — TURNING OFF THE AT LEAST ONE DEFROSTING HEATER

207 — COUNTING A DELAY TIME

208 — DETERMINING IF THE DELAY TIME IS EQUAL TO THE PREDETERMINED DELAY TIME — NO

YES

209 — TURNING ON THE COMPRESSOR AND THE AT LEAST ONE COOLING FAN AND OPENING THE AT LEAST ONE EXPANSION VALVE

FIG.9

FIG.10

EP 2 048 460 A1

FIG.11

EP 2 048 460 A1

MONITORING TEMPERATURES
INSIDE THE CHILL BOXES — 300

DETERMINING IF THE
TEMPERATURE INSIDE ANY CHILL BOX
IS HIGHER THAN THE CORRESPONDING
MAXIMUM TEMPERATURE

NO

301    YES

DETERMINING IF THE
COMPRESSOR IS ON    NO    TURNING ON THE COMPRESSOR

303

302

YES

OPENING ALL EXPANSION
VALVES — 304

MONITORING TEMPERATURES
INSIDE THE CHILL BOXES

305

306

DETERMINING IF THE
TEMPERATURE IN ANY CHILL
BOX IS LOWER THAN THE
CORRESPONDING MINIMUM
TEMPERATURE    NO

YES    307

CLOSING THE CORRESPONDING
EXPANSION VALVE

NO    DETERMINING IF ALL
EXPANSION VALVES ARE
CLOSED    YES

308

309

TURNING OFF THE
COMPRESSOR

FIG.12

**European Patent Office**

# EUROPEAN SEARCH REPORT

Application Number

EP 07 01 9872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 778 689 A (BEATENBOUGH BRYAN [US]) 14 July 1998 (1998-07-14) * columns 2-4; claims 1-10; figures 1-3 * | 1-8 | INV. F25D21/06 |
| A | GB 1 579 215 A (KYSOR INDUSTRIAL CORP) 12 November 1980 (1980-11-12) * pages 1,3-5; claims 1-3; figures 1-4 * | 1-8 | |
| A | US 4 127 765 A (HEANEY JAMES J) 28 November 1978 (1978-11-28) * columns 1,4; claims 1-9; figures 1,6 * | 1-8 | |
| A | US 2005/229614 A1 (ANSTED ROGER [US]) 20 October 2005 (2005-10-20) * claims 1-7; figures 1,2 * | 1-8 | |
| A | FR 2 404 415 A (KYSOR INDUSTRIAL CORP [US]) 27 April 1979 (1979-04-27) * pages 5-7; claims 1-4; figures 1-4 * | 1-8 | |
| A | US 2005/120728 A1 (CARTER DAVID [US]) 9 June 2005 (2005-06-09) * claims 1-21; figures 1,3 * | 1-8 | TECHNICAL FIELDS SEARCHED (IPC) F25D A47F |
| A | DE 43 18 842 A1 (YORK INT GMBH [DE]) 8 December 1994 (1994-12-08) * claims 1-9 * | 1-8 | |
| A | EP 0 513 539 A (MERLONI ELETTRODOMESTICI SPA [IT] MERLONI ELETTRODOMESTICI SPA [JP]) 19 November 1992 (1992-11-19) * columns 2-10; claims 1-3,25-29; figures 1-4 * | 1-8 | |

The present search report has been drawn up for all claims

| Place of search | Date of completion of the search | Examiner |
|---|---|---|
| Munich | 20 February 2008 | Amous, Moez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 01 9872

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2008

| Patent document cited in search report | | Publication date | Patent family member(s) | | Publication date |
|---|---|---|---|---|---|
| US 5778689 | A | 14-07-1998 | NONE | | |
| GB 1579215 | A | 12-11-1980 | NONE | | |
| US 4127765 | A | 28-11-1978 | CA | 1077284 A1 | 13-05-1980 |
| | | | JP | 54112060 A | 01-09-1979 |
| US 2005229614 | A1 | 20-10-2005 | NONE | | |
| FR 2404415 | A | 27-04-1979 | AU | 519195 B2 | 19-11-1981 |
| | | | AU | 3622878 A | 22-11-1979 |
| | | | CA | 1068921 A1 | 31-12-1979 |
| | | | DE | 2840483 A1 | 05-04-1979 |
| | | | JP | 54054367 A | 28-04-1979 |
| US 2005120728 | A1 | 09-06-2005 | NONE | | |
| DE 4318842 | A1 | 08-12-1994 | NONE | | |
| EP 0513539 | A | 19-11-1992 | DE | 69209559 D1 | 09-05-1996 |
| | | | DE | 69209559 T2 | 26-09-1996 |
| | | | ES | 2086020 T3 | 16-06-1996 |
| | | | IT | 1248098 B | 05-01-1995 |

EPO FORM P0459

For more details about this annex : see Official Journal of the European Patent Office, No. 12/82